# EUROPÄISCHE PATENTSCHRIFT

(11) **EP 3 656 176 B1**
(45) Veröffentlichungstag und Bekanntmachung des Hinweises auf die Patenterteilung: **06.08.2025**
(21) Anmeldenummer: 18730749.1
(22) Anmeldetag: 11.06.2018
(51) Int. Cl.: H04W 76/14, H04W 4/44, H04W 4/46, H04W 16/14

(54) **VERFAHREN ZUM BETREIBEN EINER STRASSENSEITIGEN NETZWERKEINHEIT UND STRASSENSEITIGE NETZWERKEINHEIT**
METHOD FOR OPERATING A ROADSIDE NETWORK UNIT, AND ROADSIDE NETWORK UNIT
PROCÉDÉ POUR FAIRE FONCTIONNER UNE UNITÉ RÉSEAU CÔTÉ ROUTE ET UNITÉ RÉSEAU CÔTÉ ROUTE

(30) Priorität: 18.07.2017 DE 102017212241; 13.10.2017 DE 102017218316
(43) Veröffentlichungstag der Anmeldung: 27.05.2020
(73) Patentinhaber: Robert Bosch GmbH, 70442 Stuttgart (DE)
(72) Erfinder: BRAHMI, Nadia, 31139 Hildesheim (DE); ECKERT, Kurt, 71254 Ditzingen (DE); THEIN, Christoph, 31139 Hildesheim (DE)
(86) Internationale Anmeldenummer: PCT/EP2018/065268
(87) Internationale Veröffentlichungsnummer: WO 2019/015867

(56) Entgegenhaltungen:
- WO-A1-2017/071137
- CN-A- 104 754 681
- ZTE: "Discussion on eNB type RSU and UE type RSU", vol. RAN WG2, no. Dubrovnik, Croatia; 20160411 - 20160415, 1 April 2016 (2016-04-01), XP051082085, Retrieved from the Internet <URL:http://www.3gpp.org/ftp/tsg_ran/WG2_RL2/TSGR2_93bis/Docs/> [retrieved on 20160401]

## Beschreibung

### Stand der Technik

Die Erfindung betrifft ein Verfahren zum Betreiben der straßenseitigen Netzwerkeinheit und eine straßenseitige Netzwerkeinheit.

Es ist bekannt, dass bereits heute Fahrzeuge in der Lage sind, Informationen mit anderen Fahrzeugen in deren Nähe (V2V: Vehicle to Vehicle) auszutauschen. Auch können Fahrzeuge mit straßenseitiger Infrastruktur drahtlos kommunizieren (V2I: Vehicle to Infrastructure). Ebenso kann das Fahrzeug mit einem Backend-Server im Internet (V2N: Vehicle to Network) oder mit einem Fußgänger-Endgerät (V2P: Vehicle to Person) drahtlos kommunizieren. Diese Kommunikation wird insgesamt auch als Vehicle-to-Everything (V2X) bezeichnet.

Die Entwicklung neuer Funktionen und Dienstleistungen in der Automobilindustrie wie beispielsweise automatisiertes Fahren profitiert von V2X. Verkehrssicherheit, Fahrkomfort und Energieeffizienz können verbessert werden. Dies führt zu neuen Produkten und Geschäftsmodellen für Autohersteller, Automobilzulieferer und andere Dienstleister.

Die erste Generation der V2X-Anwendungen, die in den kommenden Jahren eingesetzt werden soll, ist hauptsächlich auf die Anwendung auf der Straße bezogen. Ihr Ziel ist es, dem Fahrer Informationen über das Straßenumfeld bereitszustellen. Fahrzeuge stellen periodisch Statusinformationen (z. B. Position, Geschwindigkeit, Beschleunigung usw.) und/oder Ereignisinformation (Rettungseinsatz, liegen gebliebenes Fahrzeug, Stau) bereit. Diese Informationen werden in der Regel in Form von Kurzmitteilungen lokal abgesetzt.

Von benachbarten Fahrzeugen kann diese ereignisbasierte Information an eine zentrale Netzwerkeinheit (Basisstation, Backend) geschickt werden.

Für V2X Direct Device-to-Device (D2D) Kommunikation gibt es derzeit zwei konkurrierende Technologien. Die erste Technologie basiert funktechnisch auf dem IEEE802.11p Standard, welcher die Basis für die übergreifenden Standards DSRC (Dedicated Short Range Communication) in USA und ETSI ITS G5 (ETSI: European Telecommunications Standards Institute; ITS: Intelligent Transport Systems) in Europa bildet. Die zweite Technologie basiert auf 3GPP (3rd Generation Partnership Project) LTE (Long Term Evolution) und ist auch unter dem Kürzel LTE-V2X bekannt. Eine Weiterentwicklung der LTE-V2X-Technologie wird mit 5G (5th generation mobile networks) erwartet.

Der IEEE 802.11p-Standard verwendet die PHY-Schicht des IEEE 802.11a-Standards auf der Grundlage von Orthogonal Frequency Division Multiplexing (OFDM) mit einigen Modifikationen. Die MAC-Schicht basiert auf dem Enhanced Distributed Channel Access (EDCA), welcher konkurrenzbasiert ist. Des Weiteren wird Carrier Sense Multiple Access (CSMA) mit Collision Avoidance (CSMA / CA) verwendet. CSMA / CA folgt dem Listen-Before-Talk-Prinzip, um Kollisionen auf dem Kanal zu minimieren. Wenn eine Netzwerkeinheit (in diesem Zusammenhang ein Fahrzeug) Daten zu übermitteln hat, führt diese eine Kanalmessung durch, um zu überprüfen, ob der Kanal besetzt ist. Wenn der Kanal als leer wahrgenommen wird, wartet die Netzwerkeinheit mit der geplanten Übertragung eine zufallsermittelte Zeit ab und beginnt dann mit der Übertragung. Wenn der Kanal während der Kanalmessung belegt ist, so wird die Netzwerkeinheit eine Backoff-Prozedur durchführen, d. h. sie wartet mit dem nächsten Kanalzugriff eine zufallsermittelte Zeitperiode ab. Je höher die Anzahl der Netzwerkeinheiten ist, die in einem geografischen Gebiet zu senden versuchen, desto höher ist die Wahrscheinlichkeit, dass eine Netzwerkeinheit ihre Übertragung verzögert, was zu insgesamt erhöhten Verzögerungen im Netzwerk führt. Der IEEE 802.11p-Standard bietet gegenüber anderen WLAN-Standards auf Basis von IEEE 802.11 Vorteile in Bezug auf Latenz und Signalisierungsaufwand und ist auf den Anwendungsfall V2V angepasst.

Die LTE-Erweiterung für V2X ab dem 3GPP Release 14 schlägt vor, ein lizenziertes und/oder ein nicht lizenziertes Spektrum für die Kommunikation zu nutzen. Die V2V-Kommunikation basiert auf einer direkten Device-to-Device-Schnittstelle (auch als Sidelink-Schnittstelle an der physikalischen Schicht bezeichnet). Im Gegensatz zu 802.11p geschieht die Übertragung zellgestützt, d. h. durch das Netzwerk geplant durchführt. Übertragungsrechte werden von einer Scheduler-Einheit, die sich in der Basisstation befindet, erteilt, sodass Kollisionen vermieden und Störungen minimiert werden. Die Kontrolle durch die Basisstation kann nur in Bereichen durchgeführt werden, in denen das Basisstationsignal verfügbar ist (in-coverage). In einem Fall, in dem kein Basisstationssignal zur Verfügung steht (out-of-coverage), findet die Kommunikation mit vordefinierten Parametern über den Sidlink statt.

Die 5G Automotive Association (5GAA) möchte das 5,9 GHz ITS-Frequenzspektrum, auf dem auch die ITS-G5-Systeme arbeiten, verwenden. Dies stellt eine Bedrohung für die Zukunft der ITS-G5-Systeme und deren Einsatz dar, da einige Automobilhersteller ihre Pläne bereits angekündigt haben, ITS-G5-basierte Systeme in ihrem Autos zu verbauen. Damit würden zwei unterschiedliche Drahtloskommunikationssysteme im gleichen nicht lizenzierten Frequenzbereich senden und es ergäben sich Leistungsverschlechterungen für beide Technologien.

XP051082085; ZTE "Discussion on eNB type RSU and UE type RSU"; 3GPP TSG-RAN WG2 Meeting #93bis, Dubrovnik, Croatia, 11th - 16th April 2016; offenbart Erweiterungen für die X2-Schnittstelle, um Inter-RSU-Kommunikation für eNB-Typ-RSUs zu unterstützen.

Mithin könnte man eine objektive technische Aufgabe dahingehend formulieren, als dass ein Koexistenzmechanismus für die zwei unterschiedliche Drahtloskommunikationstechnologien zu schaffen ist, um vorhandene Ressourcen fair aufzuteilen.

### Offenbarung der Erfindung

Das der Erfindung zugrunde liegende Problem wird durch ein Verfahren zum Betreiben einer straßenseitigen Netzwerkeinheit nach dem Anspruch 1 und eine eine straßenseitige Netzwerkeinheit nach einem nebengeordneten Anspruch gelöst.

Es wird gemäß einem ersten Aspekt ein Verfahren zum Betreiben einer straßenseitigen Netzwerkeinheit vorgeschlagen, gemäß des Anspruchs 1.

Gemäß einem zweiten Aspekt wird eine straßenseitige Netzwerkeinheit vorgeschlagen, gemäß des Anspruchs 9.

Dadurch, dass die Nutzdaten auf dem Sidelink-Kanal im lizenzierten Frequenzbereich und/oder auf dem Adhoc-Kanal im nicht lizenzierten Frequenzbereich versendet werden, wird eine vorteilhafte Aufteilung der Kommunikation in den beiden Frequenzbereichen erreicht. Je höher der Durchsetzungsgrad mit Netzwerkeinheiten, welche gemäß dem zweiten Aspekt ausgebildet sind, ist, desto besser funktioniert diese Trennung der Kommunikation in den beiden Frequenzbereichen. Entsprechend reduziert sich die Kollisionswahrscheinlichkeit auf dem Sidelink-Kanal und auf dem Adhoc-Kanal und beide Kanäle profitieren. Folglich können die Vorteile beider Netzwerktechnologien genutzt werden, wobei eine Kollisionswahrscheinlichkeit gleichzeitig reduziert wird.

Weitere Merkmale und Vorteile finden sich in der nachfolgenden Beschreibung von Ausführungsbeispielen. In der Zeichnung zeigen:
- Figur 1: ein erstes zell-basiertes Drahtloskommunikationsnetzwerk und ein zweites Drahtloskommunikationsnetzwerk;
- Figur 2: ein schematisches Ablaufdiagramm;
- Figuren 3 und 4: jeweils ein schematisches Blockdiagramm;
- Figur 5: ein schematisches Sequenzdiagramm; und
- Figur 6: einen schematischen Aufbau eines Datenpakets.

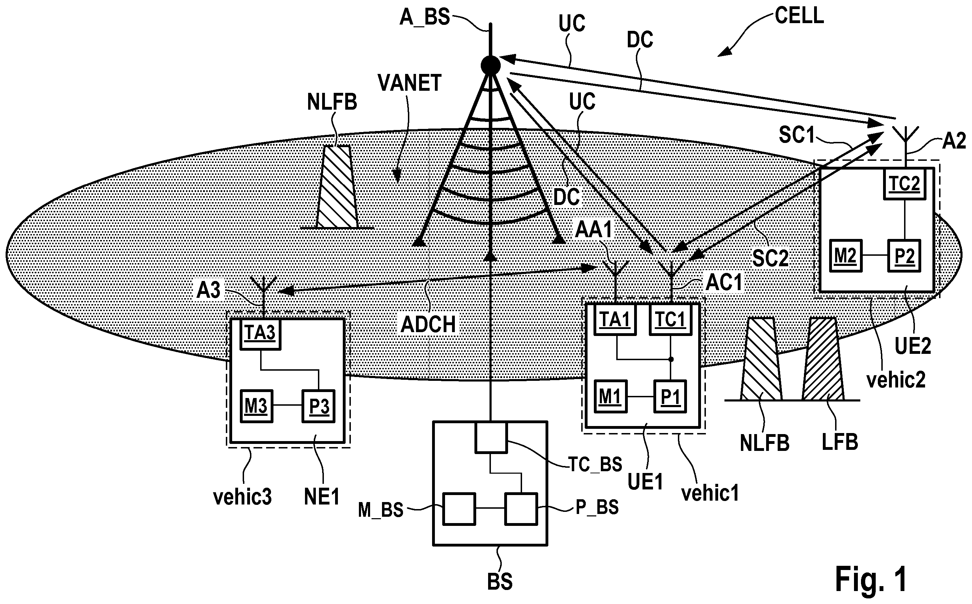

Figur 1 zeigt ein zell-basiertes Drahtloskommunikationsnetzwerk CELL und ein Adhoc-Drahtloskommunikationsnetzwerk VANET. Das zell-basierte Drahtloskommunikationsnetzwerk CELL umfasst eine netzwerkinfrastrukturseitige Netzwerkeinheit BS, eine straßenseitige Netzwerkeinheit UE1 und eine straßenseitige Netzwerkeinheit UE2. Die netzwerkinfrastrukturseitige Netzwerkeinheit BS umfasst einen Prozessor P_BS, ein Speicherelement M_BS, und einen Transceiver TC_BS. Die netzwerkinfrastrukturseitige Netzwerkeinheit BS ist auch als Basisstation oder eNodeB bezeichenbar. Die netzwerkinfrastrukturseitige Netzwerkeinheit BS ist mit einer stationären Antenne A_BS verbunden, um Daten auf einem Downlink-Kanal DC zu senden und Daten auf einem Uplink-Kanal UC zu empfangen. Die Antenne A_BS umfasst beispielsweise eine Anzahl von Antennen und ist beispielsweise als Remote Radio Head, RRH, ausgeführt. Die netzwerkinfrastrukturseitige Netzwerkeinheit BS und die Antenne A_BS stellen eine Zelle C bereit, innerhalb derer die straßenseitigen Netzwerkeinheiten UE1 und UE2 mit der Netzwerkeinheit BS kommunizieren. Selbstverständlich kann die netzwerkinfrastrukturseitige Netzwerkeinheit BS im Rahmen einer Virtualisierung auch verteilt aufgebaut sein und aus vereinzelten Netzwerkeinheiten bestehen. Die Netzwerkeinheiten BS, UE1 und UE2 sind beispielsweise nach dem LTE-V2X-Standard konfiguriert.

Die straßenseitige Netzwerkeinheit UE1 umfasst einen Prozessor P1, ein Speicherelement M1, einen Transceiver TA1 und einen Transceiver TC1. Der Transceiver TA1 ist mit einer Antenne AA1 verbunden. Der Transceiver TC1 ist mit einer Antenne AC1 verbunden. In einer Ausführungsform sind die Antennen AA1 und AC1 als ein gemeinsames Antennenelement ausgeführt sein. Die straßenseitige Netzwerkeinheit UE2 umfasst einen Prozessor T2, ein Speicherelement M2, einen Transceiver TC2 und eine Antenne A2. Auf den Speicherelementen M1, M2, M3 sind jeweilige Computerprogramme abgespeichert, die bei Ausführung auf dem jeweiligen Prozessor P1, P2, P3 die in dieser Beschreibung offenbarten Verfahren realisieren. Alternativ sind die Prozessoren P1, P2, P3 als ASIC realisiert.

Die beiden straßenseitigen Netzwerkeinheiten UE1, UE2 befinden sich innerhalb der Zelle C, und sind fähig, Daten auf dem Downlink-Kanal DC zu empfangen und Daten auf dem Uplink-Kanal UC zu versenden. Die beiden straßenseitigen Netzwerkeinheiten UE1, UE2 sind fähig direkt miteinander über einen Sidelink-Kanal SC1 in einem nicht-lizenzierten Frequenzbereich NLFB und über einen Sidelink-Kanal SC2 in einem lizenzierten Frequenzbereich LFB zu kommunizieren.

Nationale Behörden wie beispielsweise die Bundesnetzagentur der Bundesrepublik Deutschland erstellen einen Frequenznutzungsplan, welcher beispielsweise Lizenzen für einen jeweiligen Netzbetreiber umfasst. Dem Netzbetreiber ist es im Rahmen der zugewiesenen Lizenz erlaubt, die Netzwerkinfrastruktur sowie Endgeräte in einem zugewiesenen, d. h. lizenzierten Frequenzbereich bzw. Frequenzspektrum exklusiv oder als Mitglied einer Nutzergruppe zu nutzen. Im Gegensatz dazu gibt es Frequenzbereiche bzw. Frequenzspektren, welche keinem Netzbetreiber zugewiesen sind und unter gewissen Randbedingungen wie beispielsweise reduzierter sende-/Empfangsleistung frei nutzbar sind.

In dieser Beschreibung wird auf den einzigen Uplink-Kanal UC und den einzigen Downlink-Kanal DC Bezug genommen. Beispielsweise umfasst der Uplink-Kanal UC und der Downlink-Kanal DC jeweilige Unterkanäle, d. h. es stehen mehrere Kanäle im Uplink als auch im Downlink zur Verfügung. Gleiches gilt für die Sidelink-Kanäle SC1, SC2.

Das Drahtloskommunikationsnetzwerk VANET umfasst die straßenseitige Netzwerkeinheit UE1 und eine Netzwerkeinheit NE1. Die Netzwerkeinheit NE1 umfasst einen Prozessor P3, ein Speicherelement M3, einen Transceiver TA3 und eine Antenne A3. Die Transceiver TA1 und TA3 sind beispielsweise nach dem Standard IEEE 802.11p konfiguriert. Die Netzwerkeinheiten UE1 und NE1 kommunizieren direkt miteinander über einen Adhoc-Kanal ADCH in dem nicht lizenzierten Frequenzbereich NLFB. Der Adhoc-Kanal ADCH wird über ein CSMA/CA-Protokoll (CSMA/CA: Carrier Sense Multiple Access/Collision Avoidance) von den Transceivern TA1, TA3 arbitriert.

Die Netzwerkeinheiten NE1 und UE1 befinden sich in der Nähe der Netzwerkeinheit UE2. Durch diese Nähe kann die jeweilige Sendeleistung ausreichen, sodass Übertragungen auf den Kanälen ADCH und SC1, welche im gleichen nicht lizenzierten Frequenzbereich NLFB übertragen werden, sich gegenseitig nachteilhaft beeinflussen. Ziel dieser Beschreibung ist es, diese gegenseitige nachteilhafte Beeinflussung zu reduzieren.

Die straßenseitigen Netzwerkeinheiten UE1, UE2 und NE1 sind in jeweiligen Kraftfahrzeugen vehic1, vehic2, vehic3 angeordnet und mit einem jeweils dort angeordneten nicht gezeigten Steuergerät zum Datenaustausch verbunden. In einer alternativen Ausführungsform sind die straßenseitigen Netzwerkeinheiten UE1, UE2 und NE1 Teil des Steuergeräts in dem jeweiligen Kraftfahrzeug vehic1, vehic2, vehic3. In einer weiteren alternativen Ausführungsform sind die straßenseitigen Netzwerkeinheiten UE1, UE2 und NE1 anstatt in einem Kraftfahrzeug in einer feststehenden Infrastruktur wie beispielsweise einer Ampel angeordnet.

Die Sidelink-Kanäle SC1, SC2 und ein Sidelink im allgemeinen sind beispielsweise durch das Dokument 3GPP TS 36.300 V14.2.0 (2017-03) definiert, welches durch Bezugnahme in diese Beschreibung aufgenommen ist. Der Sidelink umfasst Sidelink Discovery, Sidelink-Kommunikation und V2X-Sidelink-Kommunikation zwischen den Netzwerkeinheiten UE1, UE2. Der Sidelink verwendet Uplink-Ressourcen und eine physikalische Kanalstruktur ähnlich wie die des Uplinks. Der Sidelink unterscheidet sich also vom Uplink in Bezug auf den physikalischen Kanal.

Der Sidelink ist auf einzelne Clusterübertragungen für die physikalischen Sidelink-Kanäle begrenzt. Weiterhin verwendet der Sidelink eine 1-Symbol-Lücke am Ende jedes Sidelink-Subframe. Für die V2X-Sidelink-Kommunikation werden PSCCH, Physical Sidelink Control Channel, und PSSCH, Physical Sidelink Shared Channel, im gleichen Subframe übertragen. Die Sidelink-Kanäle SC1, SC2 sind beispielsweise der PSSCH.

Die physikalische Schichtverarbeitung von Transportkanälen im Sidelink unterscheidet sich von der Uplink-Übertragung in den folgenden Schritten: Scrambling: Für PSDCH, Physical Sidelink Discovery Channel, und PSCCH ist das Scrambling nicht spezifisch für die Netzwerkeinheit; Modulation: 64 QAM und 256 QAM wird für den Sidelink nicht unterstützt (QAM: Quadrature amplitude modulation). Der PSCCH gibt Sidelink-Ressourcen und andere Übertragungsparameter an, die von der jeweiligen Netzwerkeinheit UE1, UE2 für den PSSCH verwendet werden.

Für die PSDCH-, PSCCH- und PSSCH-Demodulation werden Referenzsignale ähnlich den Uplink-Demodulationsreferenzsignalen im 4-ten Symbol des Slots im normalen CP, Cyclic Prefix, und im dritten Symbol des Slots im erweiterten CP übertragen. Die Sidelink-Demodulationsreferenzsignal-Sequenzlänge entspricht der Größe (Anzahl der Subcarrier) der zugeordneten Ressource. Für die V2X-Sidelink-Kommunikation werden Referenzsignale in den 3. und 6. Symbolen des ersten Slots und in den 2. und 5. Symbolen des zweiten Slots im CP übertragen. Für PSDCH und PSCCH werden Referenzsignale basierend auf einer festen Basissequenz, zyklischem Shift und orthogonalem Cover Code erzeugt. Für die V2X-Sidelink-Kommunikation wird der zyklische Shift für PSCCH zufällig bei jeder Übertragung ausgewählt.

Für Messungen des jeweiligen Sidelink-Kanals SC1, SC2 stehen auf der Seite der Netzwerkeinheiten UE1, UE2 folgende Möglichkeiten zur Verfügung: Empfangsleistung des Sidelink-Referenzsignals (S-RSRP); Empfangsleistung des Sidelink-Discovery-Referenzsignals (SD-RSRP); Empfangsleistung des PSSCH-Referenzsignals (PSSCH-RSRP); Signalstärkeindikator für Sidelink-Referenzsignale (S-RSSI).

Der Adhoc-Kanal ADCH und das Adhoc-Drahtloskommunikationsnetzwerk VANET sind beispielsweise durch den IEEE-Standard "802.11p-2010 - IEEE Standard for Information technology-- Local and metropolitan area networks-Specific requirements-- Part 11: Wireless LAN Medium Access Control (MAC) and Physical Layer (PHY) Specifications Amendment 6: Wireless Access in Vehicular Environments" definiert, welcher durch Bezugnahme in diese Beschreibung aufgenommen ist. IEEE 802.11p ist ein Standard zur Erweiterung des WLAN-Standards IEEE 802.11. Die Zielrichtung von IEEE 802.11p ist es, die WLAN-Technik in Personen-Kraftfahrzeugen zu etablieren und eine zuverlässige Schnittstelle für Anwendungen intelligenter Verkehrssysteme (engl. Intelligent Transport Systems, ITS) zu schaffen. IEEE 802.11p ist auch Basis für Dedicated Short Range Communication (DSRC) im Frequenzband von 5,85 bis 5,925 GHz. Um Verwechslungen mit der europäischen DSRC Version zu vermeiden, wird vor allem in Europa eher der Begriff ITS-G5 anstatt DSRC verwendet.

Das Dokument "ETSI EN 302 663 V1.2.0 (2012-11)", welches durch Bezugnahme in diese Beschreibung aufgenommen ist, beschreibt beiden untersten Schichten der ITS-G5-Technologie (ITS G5: Intelligent Transport Systems operating in the 5 GHz frequency band), die physikalische Schicht und die Datenverbindungsschicht. Die Transceiver TA1 und TA3 realisieren beispielsweise diese beiden untersten Schichten und korrespondierende Funktionen nach "ETSI TS 102 687 V1.1.1 (2011-07)", um den Adhoc-Kanal ADCH zu verwenden. Für die Verwendung des Adhoc -Kanals ADCH stehen in Europa die folgenden nicht lizenzierten Frequenzbereiche zur Verfügung, welche Teil des nicht-lizenzierten Frequenzbereichs NLFB sind: 1) ITS-G5A für sicherheitsrelevante Anwendungen im Frequenzbereich von 5,875 GHz bis 5,905 GHz; 2) ITS-G5B für nicht-sicherheitsrelevante Anwendungen im Frequenzbereich von 5.855 GHz bis 5.875 GHz; und 3) ITS-G5D für den Betrieb von ITS-Anwendungen im Frequenzbereich 5,905 GHz bis 5.925 GHz. ITS-G5 ermöglicht eine Kommunikation zwischen den zwei Netzwerkeinheiten UE1 und UE2 außerhalb des Kontextes einer Basistation. ITS-G5 ermöglicht den sofortigen Austausch von Datenrahmen und vermeidet einen Management-Overhead, der bei der Einrichtung eines Netzwerks verwendet wird.

Das Dokument "ETSI TS 102 687 V1.1.1 (2011-07)", welches durch Bezugnahme in diese Beschreibung aufgenommen ist, beschreibt für ITS-G5 einen "Decentralized Congestion Control Mechanisms". Der Adhoc-Kanal ADCH dient unter anderem dem Austausch von Daten betreffend die Verkehrssicherheit und die Verkehrseffizienz. Die Transceiver TA1 und TA3 realisieren beispielsweise die Funktionen, wie sie im Dokument "ETSI TS 102 687 V1.1.1 (2011-07)" beschrieben sind. Die Anwendungen und Dienstleistungen im ITS-G5 beruhen auf dem kooperativen Verhalten der straßenseitigen Netzwerkeinheiten, die das Adhoc-Netzwerk VANET (VANET: vehicular ad hoc network) bilden. Das Adhoc-Netzwerk VANET ermöglicht zeitkritische Straßenverkehrsanwendungen, bei denen ein schneller Informationsaustausch notwendig ist, um den Fahrer und/oder das Fahrzeug rechtzeitig zu warnen und zu unterstützen. Um eine ordnungsgemäße Funktion des Adhoc-Netzwerks VANET zu gewährleisten, wird "Decentralized Congestion Control Mechanisms" (DCC) für den Adhoc-Kanal ADCH von ITS-G5 verwendet. DCC hat Funktionen, die sich auf mehreren Schichten der ITS-Architektur befinden. Die DCC-Mechanismen beruhen auf Wissen über den Kanal. Die Kanalzustandsinformation wird durch Kanal-Sondierung gewonnen. Kanalzustandsinformationen können durch die Methoden TPC (transmit power control), TRC (transmit rate control) und TDC (transmit datarate control) gewonnen werden. Die Methoden ermitteln die Kanalzustandsinformation in Abhängigkeit von Empfangssignalpegelschwellen oder Präambelinformationen von detektierten Paketen.

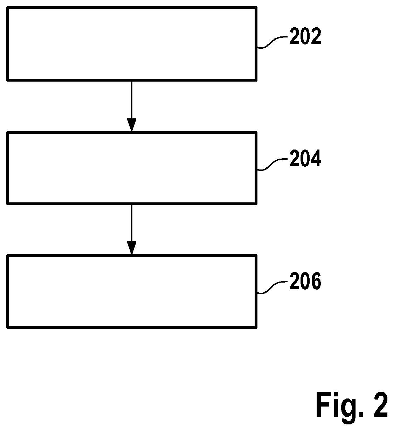

Figur 2 zeigt ein schematisches Ablaufdiagramm zum Betreiben der straßenseitigen Netzwerkeinheit UE1 aus Figur 1. In einem Schritt 202 werden Nutzdaten zum Versand an eine weitere der straßenseitigen Netzwerkeinheit ermittelt. In einem Schritt 204 werden die ermittelten Nutzdaten für den Versand auf dem Sidelink-Kanal in dem lizenzierten Frequenzbereich oder für den Versand auf dem Adhoc-Kanal in dem nicht lizenzierten Frequenzbereich bereitgestellt. In einem Schritt 206 werden die Nutzdaten entweder auf dem Sidelink-Kanal im lizenzierten Frequenzbereich oder auf dem Adhoc-Kanal im nicht lizenzierten Frequenzbereich versendet.

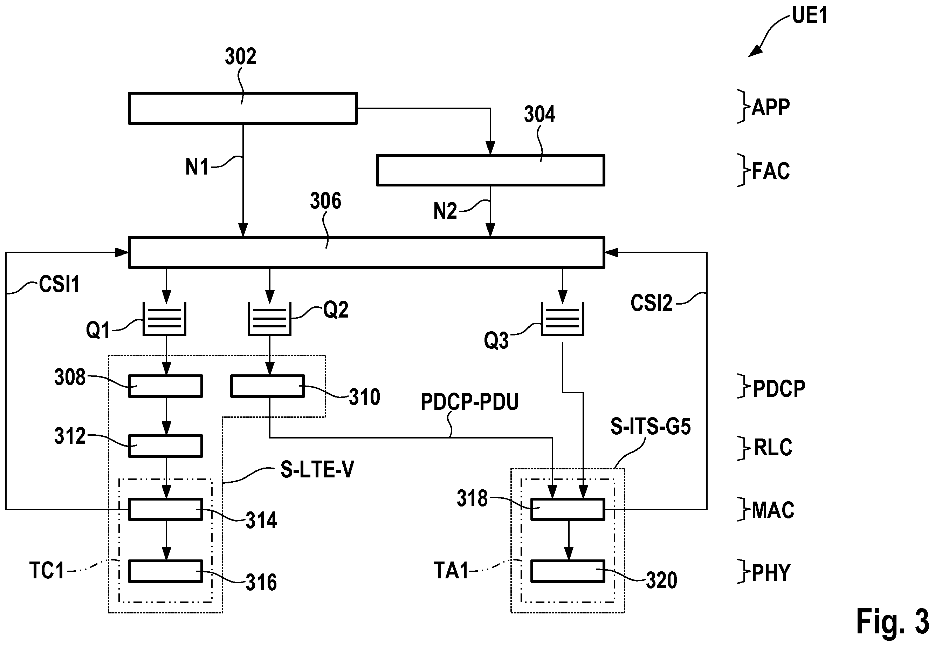

Figur 3 zeigt ein schematisches Blockdiagramm zum Betrieb der straßenseitigen Netzwerkeinheit UE 1 aus Figur 1. Ein Block 302 ist einer Application-Schicht APP zugeordnet. Ein Block 304 ist einer Facility-Schicht FAC zugeordnet. Der Block 302 ermittelt Nutzdaten N1. Der Block 304 ermittelt Nutzdaten N2. Nutzdaten N1, N2 sind auch als Payload bezeichenbar. Ein Block 306 entscheidet, welcher der drei Warteschlangen Q1, Q2 und Q3 die Nutzdaten N1, N2 bereitgestellt werden. Der Block 306 ist beispielsweise auch als Kommunikationsmanager bezeichenbar.

Blöcke 308 und 310 sind einer PDCP-Schicht zugeordnet (PDCP: Packet Data Convergence Protocol). Die Blöcke 308 und 310 umfassen beispielsweise die Funktionalität gemäß dem Dokument " 3GPP TS 36.323 V14.3.0 (2017-06)", welches durch Bezugnahme in diese Beschreibung aufgenommen ist. Der Block 310 fügt zur Unterscheidung zwischen den beiden verwendeten Typen von Drahtloskommunikationsnetzwerken und korrespondierenden Protokollstapeln eine entsprechende Netzwerkkennung in das erzeugte Datenpaket PDCP PDU (PDU: Protocol Data Unit) ein. Durch diese Netzwerkkennung, welche beispielsweise ein einzelnes Bit umfasst, kann auf Empfängerseite vorteilhaft unterschieden werden, welcher Einheit bzw. welchem Protokollstapel das empfangende Datenpaket zuordenbar und damit bereitstellbar ist.

Ein Block 312 ist einer RLC-Schicht zugeordnet (RLC: Radio Link Control) und umfasst beispielsweise die Funktionalität gemäß dem Dokument " 3GPP TS 36.322 V14.0.0 (2017-03)", welches durch Bezugnahme in diese Beschreibung aufgenommen ist. Der Block 312 übernimmt die vom Block 308 erhaltenen Daten und ermittelt Daten, welche an einen Block 314 weitergegeben werden. Der Block 314 ist einer MAC-Schicht zugeordnet (MAC: Media Access Control) und umfasst beispielsweise die Funktionalität gemäß dem Dokument "3GPP TS 36.323 V14.3.0 (2017-06)", welches durch Bezugnahme in diese Beschreibung aufgenommen ist. Der Block 314 kommuniziert mit einem Block 316, welcher einer Physical-Schicht PHY zugeordnet ist. Der Block 316 umfasst beispielsweise die Funktionalität gemäß dem Dokument "3GPP TS 36.201 V14.1.0 (2017-03)", welches durch Bezugnahme in diese Beschreibung aufgenommen ist. Der Block 316 versendet die Daten N1, N2 auf dem Sidelink-Kanal SC2 aus Figur 1. Der Transceiver TC1 umfasst beispielsweise die Blöcke 314 und 316.

Ein Block 318 ist der MAC-Schicht MAC zugeordnet und umfasst beispielsweise die Funktionalität gemäß dem Dokument "ETSI EN 302 663 V1.2.0 (2012-11)", welches durch Bezugnahme in diese Beschreibung aufgenommen ist. Der Block 318 erhält zu versendende Daten von dem Block 310 oder aus der dritten Warteschlange Q3. Der Block 320 ist der Physical-Schicht PHY zugeordnet und versendet die Nutzdaten N1, N2 auf dem Adhoc-Kanal ADCH aus Figur 1. Der Block 320 umfasst beispielsweise die Funktionalität gemäß dem Dokument "ETSI ES 202 663 V1.1.0 (2009-11)", welches durch Bezugnahme in dieses Dokument aufgenommen ist. Der Transceiver TA1 umfasst beispielsweise die Blöcke 318 und 320.

Liegen die Nutzdaten N1, N2 beispielsweise als IP-Paket (IP: Internet-Protocol) oder als UDP-Paket vor (UDP: User Datagram Protocol) vor, so werden die Nutzdaten N1, N2 vom Block 306 in eine der beiden Warteschlangen Q1, Q2 eingestellt. Der Block 306 fällt die Entscheidung, in welche der Warteschlangen Q1, Q2 die Nutzdaten N1, N2 eingestellt werden, anhand zumindest einer der folgenden Informationen: 1) dem Datentyp innerhalb des IP-Pakets, d. h. beispielsweise CAM oder DENM; 2) der Kanallast auf den Kanälen SC2, ADCH aus Figur 1, beispielsweise der Kanalzustandsinformationen CSI1 und/oder CSI2; 3) aus Übertragungsanforderungen wie beispielsweise Latenz, Verlässlichkeit, Datenmenge, welche aus der Applikationsschicht bekannt sind; 4) der Verfügbarkeit des einen und/oder anderen Kanals SC2, ADCH aus Figur 1.

Sind die Nutzdaten N1, N2 beispielsweise eines nachfolgend beschriebenen Typs CAM oder DENM , so werden die Nutzdaten N1, N2 durch den Block 306 in die dritte Warteschlange Q3 eingestellt. Selbstverständlich sind neben den Typen CAM und DEMN noch weitere Typen möglich.

Nachrichten vom Typ CAM (CAM: Cooperative Awareness Message) werden in dem Dokument "ETSI EN 302 637-2 V1.3.1 (2014-09)" definiert, welches durch Bezugnahme in diese Beschreibung aufgenommen ist. Cooperative Awareness bedeutet im Straßenverkehr, dass die Verkehrsteilnehmer und die Straßenrandinfrastruktur sich gegenseitig über die eigene Position, Fahrdynamik und Eigenschaften informieren. Verkehrsteilnehmer sind alle Arten von Straßenfahrzeugen wie Autos, Lastwagen, Motorräder, Fahrräder und Fußgänger und Straßenrand-Infrastruktur einschließlich Verkehrszeichen, Ampeln oder Barrieren und Tore. CAM-Nachrichten werden in regelmäßigen Zeitabständen d. h. periodisch versendet. Eine Nachricht vom Typ CAM, welche ein Einsatzfahrzeug oder einen Stau anzeigt, dient nicht nur der Verkehrseffizienz sondern auch der Verkehrssicherheit.

Nachrichten vom Typ DENM (DENM: Decentralized Enviromental Notification Message) werden in dem Dokument "ETSI EN 302 637-3 V1.2.1 (2014-09)" definiert, welches durch Bezugnahme in diese Beschreibung aufgenommen ist. Ein DEN-Dienst (DEN: Decentralized Environmental Notification) unterstützt eine RHW-Anwendung (RHW: Road Hazard Warning). Der DEN-Dienst generiert, verwaltet und verarbeitet die Nachrichten vom Typ DENM. Eine Nachricht vom Typ DENM enthält Informationen über eine Straßengefahr oder eine anormale Verkehrslage und die jeweilige Position. Der DEN-Dienst liefert die DENM als Payload an die ITS-Netzwerk- und Transportschicht für die Nachrichtenverbreitung. Eine ITS-Anwendung verbreitet eine Nachricht vom Typ DENM an die Netzwerkeinheiten durch direkte Fahrzeug-zu-Fahrzeug- oder Fahrzeug-zu-Infrastruktur-Kommunikation auf dem Adhoc-Kanal ADCH. Auf der Empfangsseite verarbeitet der DEN-Dienst eines empfangenden ITS-S die empfangene Nachricht vom Typ DENM und liefert den DENM-Inhalt an eine Anwendung. Diese Anwendung übermittelt dem Fahrer oder dem Fahrzeug die Informationen, wenn die Informationen über die Straßenverkehrsbedingung für den Fahrer relevant sind. Der Fahrer oder das Fahrzeug ist dann in der Lage, entsprechende Maßnahmen zu ergreifen, um auf die Situation entsprechend zu reagieren.

Alternativ oder zusätzlich zum Typ der Nutzdaten N1, N2 wird die Entscheidung, in welche der drei Warteschlangen Q1 bis Q3 die Nutzdaten N1, N2 eingestellt werden, in Abhängigkeit von lokalen Kanalzustandsinformationen CSI1 und/oder CSI2 getroffen. Die lokale Kanalzustandsinformation CSI1 wird von den Block 314 ermittelt und umfasst beispielsweise ein Verhältnis von geschedulten Radio-Ressourcen zu freien Radio-Ressourcen auf dem Sidelink-Kanal im lizenzierten Frequenzbereich. Die lokale Kanalzustandsinformation CSI2 wird von dem Block 318 ermittelt und umfasst beispielsweise eine Anzahl von über den Adhoc-Kanal direkt erreichbaren straßenseitigen Netzwerkeinheiten, d. h. eine lokale Dichte von straßenseitigen Netzwerkeinheiten. Die Kanalzustandsinformationen CSI2 zeigt beispielsweise an, dass der Adhoc-Kanal im nicht lizenzierten Frequenzbereich eine hohe Belegung aufweist, d. h. die Anzahl der detektierten erreichbaren straßenseitigen Netzwerkeinheiten in der Nähe überschreitet einen Schwellwert. Bei einer hohen Belegung des Adhoc-Kanals entscheidet der Block 306, dass die Nutzdaten N1, N2 in die erste Warteschlange Q1 eingestellt werden.

In einer Ausführungsform werden die lokalen Kanalzustandsinformationen CSI1 und CSI2 miteinander verglichen und es wird in Abhängigkeit von dem Vergleich ermittelt, in welche der Warteschlangen Q1, Q2 oder Q3 die Nutzdaten N1, N2 eingestellt werden.

Das Einstellen von Daten in die Warteschlange Q1 bedeutet, dass ein Versand der eingestellten Daten auf dem Sidelink-Kanal im lizenzierten Frequenzbereich erfolgt. Das Einstellen von Daten in die Warteschlange Q2 bedeutet, dass ein Versand der eingestellten Daten unter Zwischenschaltung des Blocks 310, welcher der PDCP-Schicht zugeordnet ist, auf dem Adhoc-Kanal im nicht lizenzierten Frequenzbereich erfolgt. Das Einstellen von Daten in die Warteschlange Q3 bedeutet, dass ein Versand der eingestellten Daten auf dem Adhoc-Kanal im nicht lizenzierten Frequenzbereich erfolgt, wobei die eingestellten Daten von dem Block 318, welcher der MAC-Schicht zugeordnet ist, unmittelbar in Empfang genommen d. h. direkt zugeführt werden. Das bedeutet, dass die Nutzdaten N1, N2, welche ausgehend von der Application-Schicht APP oder der Facility-Schicht FAC der Warteschlange Q3 zugeführt werden, von dort direkt der MAC-Schicht zum Versand über den Adhoc-Kanal bereitgestellt werden.

Die Blöcke 308, 310, 312, 314 und 316 sind Teil eines LTE-V-Protokollstapels S-LTE-V. Die Blöcke 318 und 320 sind Teil eines ITS-G5-Protokollstapels S-ITS-G5, wobei vorliegend lediglich die zwei untersten Schichten MAC und PHY realisiert sind und die übrigen Schichten nicht exklusiv für ITS-G5 vorgesehen sind. Vorteilhaft wird dadurch nur ein vereinfachter Transceiver TC1 ermöglicht.

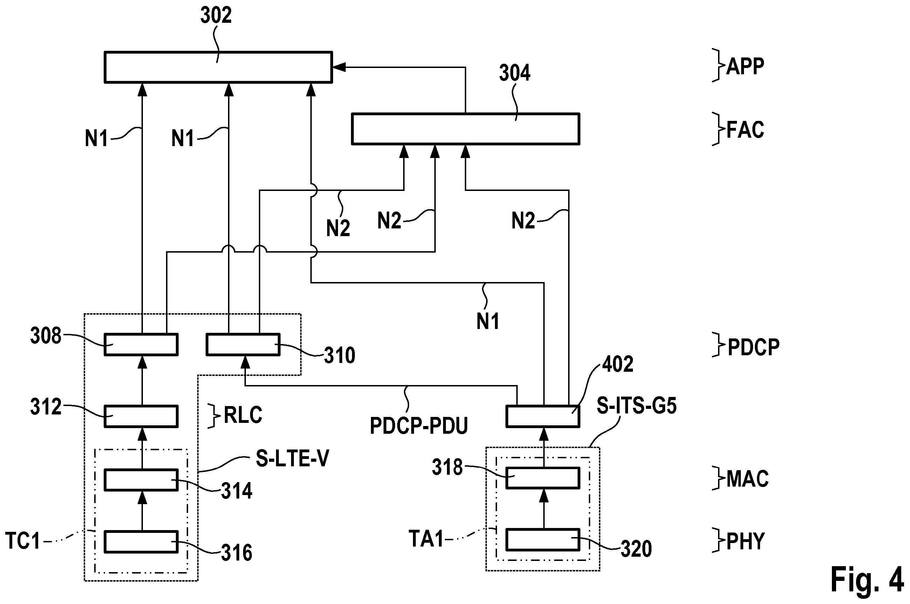

Figur 4 zeigt ein schematisches Blockdiagramm zum Betrieb der straßenseitigen Netzwerkeinheit UE 1 aus Figur 1. Im Unterschied zu Figur 3 ist ein Empfang von Nutzdaten N1, N2 gezeigt. Ein Block 402 ermittelt in Abhängigkeit von den durch den Block 318 zur Verfügung gestellten Daten, ob entweder den Blöcken 302 oder 304 die Nutzdaten N1, N2 direkt zur Verfügung gestellt werden oder ob die empfangenen Daten ein PDCP-Paket PDU umfassen und somit dem Block 310 bereitgestellt werden.

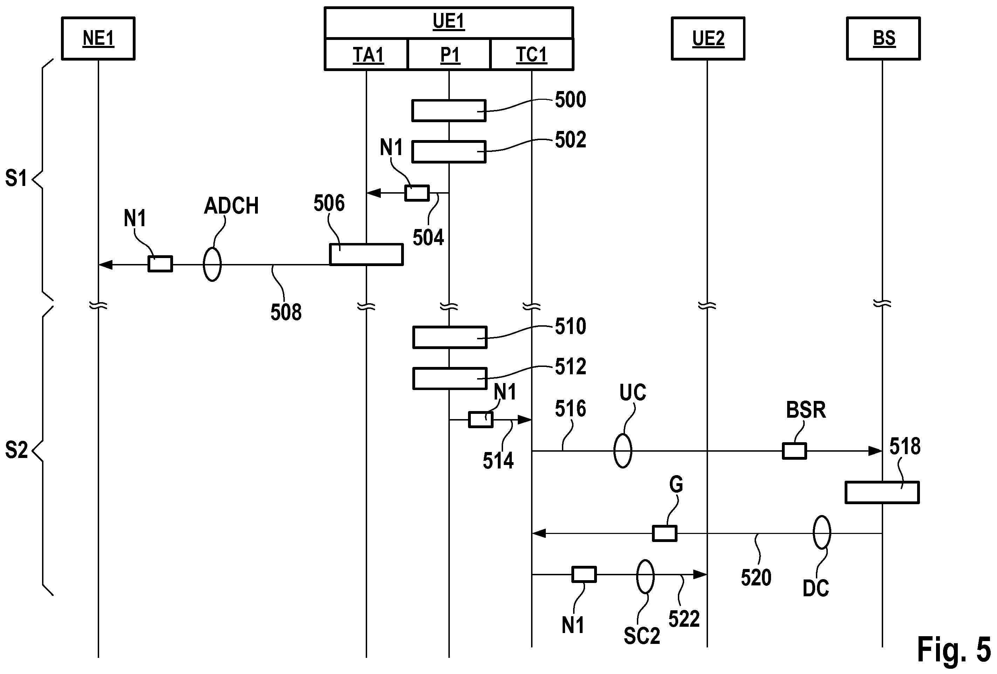

Figur 5 zeigt ein schematisches Sequenzdiagramm mit Sequenzen S1 und S2. In einem Schritt 500 werden in der Application-Schicht Nutzdaten N1 ermittelt. In einem Schritt 502 wird entschieden, dass die ermittelten Nutzdaten N1 auf dem Adhoc-Kanal ADCH versendet werden sollen. In einem Schritt 504 werden die Nutzdaten N1 dem Transceiver TA1 bereitgestellt. In einem Schritt 506 führt der Transceiver TA1 eine Arbitrierung des Adhoc-Kanals ADCH durch. Ist die Arbitrierung erfolgreich, d. h. ist der Adhoc-Kanal ADCH zu einem Datenversand frei, so versendet der Transceiver TA1 in einem Schritt 508 die Nutzdaten N1 auf dem Adhoc-Kanal ADCH in dem nicht lizenzierten Frequenzbereich.

In einem Schritt 510 werden in der Application-Schicht die Nutzdaten N1 ermittelt. In einem Schritt 512 wird entschieden, dass die ermittelten Nutzdaten N1 auf dem Sidelink-Kanal SC2 versendet werden sollen. In einem Schritt 514 stellt der Prozessor P1 dem Transceiver TC1 die Nutzdaten N1 zu einem Versand zur Verfügung. In einem Schritt 516 übermittelt der Transceiver TC1 eine Scheduling-Request-Nachricht BSR, beispielsweise einen Buffer Status Report, auf dem Uplink-Kanal UC an die netzwerkinfrastrukturseitige Netzwerkeinheit BS. Eine Scheduling-Grant-Nachricht G wird in einem Schritt 518 ermittelt und in einem Schritt 520 auf dem Donwnlink-Kanal DC an die straßenseitige Netzwerkeinheit UE1 übermittelt. Die Scheduling-Grant-Nachricht G1 umfasst eine Zuteilung von Radio-Ressourcen auf dem Sidelink-Kanal SC2. Auf den zugeteilten Radio-Ressourcen des Sidelink-Kanals SC2 werden die ermittelten Nutzdaten N1 in einem Schritt 522 an die straßenseitige Netzwerkeinheit UE2 übersandt.

In einer Ausführungsform des Schritts 502 und des Schritts 512 sind die ermittelten Nutzdaten N1 mit einer Anforderung an die Übertragung verknüpft. Diese Anforderung kann beispielsweise eine Traffic-Klasse der Nutzdaten N1, N2, insbesondere eine Traffic Klasse nach dem Dokument "ESTI 636-4-2 V1.1.1 (2013-10)", welches durch Bezugnahme Teil dieser Beschreibung ist, erfolgen. Die Traffic-Klasse, welche zur Übertragung auf dem Adhoc-Kanal ADCH führt, umfasst beispielsweise Nutzdaten vom Typ DENM und CAM sowie weitere mögliche Typen von Nutzdaten/Nachrichten. Die Traffic-Klasse, welche zur Übertragen auf dem Sidelink-Kanal SC2 führt, umfasst Nutzdaten eines anderen Typs OTH wie beispielsweise nicht verkehrskritische Hinweise wie Werbung an den Fahrer.

In einer weiteren Ausführungsform der Schritte 502 und 512 ist die Anforderung an die Übertragung eine Größe der Nutzdaten N1, eine Latenzanforderung und/oder eine gewünschte Zuverlässigkeit der Übertragung.

In einer weiteren Ausführungsform der Schritte 502 und 512 umfasst die Anforderung eine Übertragung auf den beiden Kanälen SC2 und ADCH, womit die Übertragungssicherheit durch Redundanz erhöht wird.

In einer weiteren Ausführungsform der Schritte 502 und 512 wird die Kanalzustandsinformation CSI2 des Adhoc-Kanals dazu verwendet, die Entscheidung zur Bereitstellung auf einem der Kanäle ADCH, SC2 zu ermitteln. Eine Bereitstellung zum Versand auf dem Sidelink-Kanal SC2 erfolgt dann, wenn die Kanalzustandsinformation CSI2 eine hohe Belegung oberhalb eines vorgegebenen Schwellwerts anzeigt. Beispielsweise ist die Anzahl der über den Adhoc-Kanal ADCH direkt erreichbaren straßenseitigen Netzwerkeinheiten oberhalb eines Schwellwerts angelangt, sodass eine zuverlässige Zustellung der Nutzdaten P1 nur noch über den Sidelink-Kanal SC 2 garantiert werden kann. Entsprechend wird bei Überschreitung des vorgenannten Schwellwerts eine Bereitstellung der Nutzdaten P1 zum Versand auf dem Sidelink-Kanal SC2 gemäß den Schritten 512 und 514 durchgeführt.

In einer weiteren Ausführungsform der Schritte 502 und 512 wird die Kanalzustandsinformation CSI1 des Sidelink-Kanals dazu verwendet, die Entscheidung zur Bereitstellung auf einen der Kanäle ADHC, SC2 zu ermitteln.

In einer weiteren Ausführungsform der Schritte 502 und 512 werden die Kanalzustandsinformationen CSI1 und CSI2 dazu verwendet, die Entscheidung zur Bereitstellung auf einen der Kanäle ADHC, SC2 zu ermitteln.

In einer Ausführungsform der Schritte 502 und 512 werden die Nutzdaten N1 der zweiten Warteschlange Q2 aus Figur 3 bereitgestellt, wenn die Größe der Nutzdaten N1 einen vorgegebenen Schwellwert unterschreitet. Vorteilhaft können so geringe Datenmengen im unlizenzierten Frequenzbereich übertragen werden.

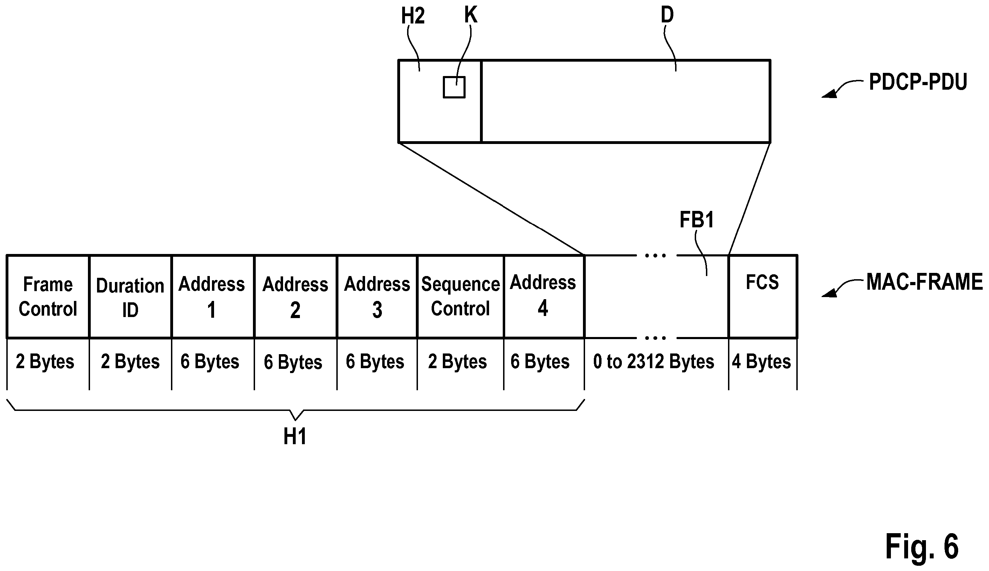

Figur 6 zeigt einen schematischen Aufbau eines Datenpakets MAC-FRAME gemäß IEEE 802.11 und erläutert das Zusammenspiel zwischen den Blöcken 310 und 318. Das Datenpaket MAC-FRAME wird von dem Block 318 in Figur 3 erstellt und vom Block 318 in Figur 4 gelesen. Das Datenpaket MAC-FRAME umfasst einen Header H1, einen Frame Body FB1 und eine Frame Check Sequence FCS.

Der Frame Body FB1 umfasst das Datenpaket PDCP PDU, welches einen Header H2 und einen Datenteil D, welcher beispielsweise die Nutzdaten umfasst. Im Header H2 ist die Netzwerkkennung K angeordnet, welche anzeigt, welchem der Protokollstapel S-LTE-V, S-ITS-G5 ein jeweiliges Datenpaket PDCP PDU zugeordnet ist. Entsprechend wird auf Empfängerseite im Block 402 in Abhängigkeit von der Netzwerkkennung K ermittelt, ob der empfangene Frame Body FB1 dem Block 310 oder einem der Blöcke 302 und 304 bereitgestellt wird. In einer alternativen nicht gezeigten Ausführungsform ist die Netzwerkkennung K in einem optionalen Parameterfeld des Headers H1 angeordnet.

## Patentansprüche

1. Ein Verfahren zum Betreiben einer straßenseitigen Netzwerkeinheit (UE1), wobei die straßenseitige Netzwerkeinheit (UE1) dazu ausgebildet ist, Nutzdaten (N1, N2) auf einem Sidelink-Kanal (SC2) eines zell-basierten Drahtloskommunikationsnetzwerks (CELL) in einem lizenzierten Frequenzbereich (LFB) und auf einem Adhoc-Kanal (ADCH) eines Adhoc-Drahtloskommunikationsnetzwerks (VANET) in einem nicht lizenzierten Frequenzbereich (NLFB) zu versenden, das Verfahren umfassend:
- Ermitteln (302; 500; 512) von Nutzdaten (N1, N2) zum Versand an zumindest eine weitere straßenseitige Netzwerkeinheit (UE2; NE1);
- Bereitstellen (304; 504; 514) der Nutzdaten (N1, N2) für den Versand auf einem Sidelink-Kanal (SC2) eines zell-basierten Drahtloskommunikationsnetzwerks (CELL) in einem lizenzierten Frequenzbereich (LFB) und für den Versand auf einem Adhoc-Kanal (ADCH) eines Adhoc-Drahtloskommunikationsnetzwerks (VANET) in einem nicht lizenzierten Frequenzbereich (NLFB); und
- Versenden (304; 508; 522) der Nutzdaten (N1, N2) auf dem Sidelink-Kanal (SC2) im lizenzierten Frequenzbereich (NLFB) und auf dem Adhoc-Kanal (ADCH) im nicht lizenzierten Frequenzbereich (NLFB).

2. Das Verfahren nach dem Anspruch 1, wobei die Nutzdaten (N1, N2) mit einer Anforderung an die Übertragung verknüpft sind, und wobei die Bereitstellung (504; 514) für den Versand auf dem Sidelink-Kanal (SC2) oder für den Versand auf dem Adhoc-Kanal (ADCH) in Abhängigkeit von der Anforderung erfolgt.

3. Das Verfahren nach dem Anspruch 2, wobei die Anforderung eine Traffic-Klasse der Nutzdaten (N1, N2), insbesondere eine Traffic-Klasse nach ETSI TS 102 636-4-2 V1.1.1 (2013-10), umfasst.

4. Das Verfahren nach einem der Ansprüche 2 bis 3, wobei die Anforderung an die Übertragung eine Größe der Nutzdaten (N1, N2) und/oder eine Latenzanforderung und/oder eine Zuverlässigkeit der Übertragung der Nutzdaten (N1, N2) umfasst.

5. Das Verfahren nach einem der vorstehenden Ansprüche, wobei eine lokale Kanalzustandsinformation (CSI2) des Adhoc-Kanals (ADCH) ermittelt wird, und wobei die Bereitstellung (504; 514) in Abhängigkeit von der lokalen Kanalzustandsinformation (CSI2) erfolgt.

6. Das Verfahren nach dem vorstehenden Anspruch, wobei die Nutzdaten (N1, N2) zum Versand auf dem Sidelink-Kanal (SC2) bereitgestellt werden, wenn die lokale Kanalzustandsinformation (CSI2) eine Belegung des Adhoc-Kanals (ADCH) oberhalb eines Schwellwerts anzeigt.

7. Das Verfahren nach einem der vorstehenden Ansprüche, wobei die Nutzdaten (N1, N2) einer PDCP-Schicht zum Versand auf dem Adhoc-Kanal (ADCH) bereitgestellt werden, wenn die Größe der Nutzdaten (N1, N2) einen Schwellwert unterschreitet.

8. Das Verfahren nach einem der vorstehenden Ansprüche, wobei ein Protokollstapel (S-ITS-G5) nach ITS-G5 keine Protokollschichten oberhalb der Schicht 2 umfasst, welche exklusiv ITS-G5 zugeordnet sind.

9. Eine straßenseitige Netzwerkeinheit (UE1) umfassend:
- einen Prozessor zum Ermitteln (302; 500; 512) von Nutzdaten (N1, N2) zum Versand an zumindest eine weitere straßenseitige Netzwerkeinheit (UE2; NE1), zum Bereitstellen (304; 504; 514) der Nutzdaten (N1, N2) für den Versand auf einem Sidelink-Kanal (SC2) eines zell-basierten Drahtloskommunikationsnetzwerks (CELL) in einem lizenzierten Frequenzbereich (LFB) und zum Bereitstellen (304; 504; 514) der Nutzdaten (N1, N2) für den Versand auf einem Adhoc-Kanal (ADCH) eines Adhoc-Drahtloskommunikationsnetzwerks (VANET) in einem nicht lizenzierten Frequenzbereich (NLFB); und
- einen Transceiver (TC1) für das zell-basierte Drahtloskommunikationsnetzwerk (CELL) zum Versenden (304; 522) der Nutzdaten (N1, N2) auf dem Sidelink-Kanal (SC2) im lizenzierten Frequenzbereich (NLFB) und einen Transceiver (TA1) für das Adhoc-Drahtloskommunikationsnetzwerk (VANET) zum Versenden (304; 508) der Nutzdaten (N1, N2) auf dem Adhoc-Kanal (ADCH) im nicht lizenzierten Frequenzbereich (NLFB).

10. Die Netzwerkeinheit (UE1) nach Anspruch 9, welche zur Ausführung des Verfahrens nach einem der Ansprüche 2 bis 8 ausgebildet ist.

## Claims

1. Method for operating a roadside network unit (UE1), wherein the roadside network unit (UE1) is designed to send payload data (N1, N2) on a sidelink channel (SC2) of a cell-based wireless communication network (CELL) in a licensed frequency band (LFB) and on an ad hoc channel (ADCH) of an ad hoc wireless communication network (VANET) in an unlicensed frequency band (NLFB); the method comprising:
- determining (302; 500; 512) payload data (N1, N2) for sending to at least one other roadside network unit (UE2; NE1);
- delivering (304; 504; 514) the payload data (N1, N2) for sending on a sidelink channel (SC2) of a cell-based wireless communication network (CELL) in a licensed frequency band (LFB) and for sending on an ad hoc channel (ADCH) of an ad hoc wireless communication network (VANET) in an unlicensed frequency band (NLFB); and
- sending (304; 508; 522) the payload data (N1, N2) on the sidelink channel (SC2) in the licensed frequency band (NLFB) and on the ad hoc channel (ADCH) in the unlicensed frequency band (NLFB).

2. Method according to Claim 1, wherein the payload data (N1, N2) are linked to a request for transmission, and wherein the delivery (504; 514) for sending on the sidelink channel (SC2) or for sending on the ad hoc channel (ADCH) is made on the basis of the request.

3. Method according to Claim 2, wherein the request comprises a traffic class of the payload data (N1, N2), in particular a traffic class according to ETSI TS 102 636-4-2 V1.1.1 (2013-10).

4. Method according to either of Claims 2 to 3, wherein the request for transmission comprises a size of the payload data (N1, N2) and/or a latency request and/or a reliability of the transmission of the payload data (N1, N2).

5. Method according to one of the preceding claims, wherein local channel status information (CSI2) pertaining to the ad hoc channel (ADCH) is determined, and wherein the delivery (504; 514) is made on the basis of the local channel status information (CSI2).

6. Method according to the preceding claim, wherein the payload data (N1, N2) are delivered for sending on the sidelink channel (SC2) when the local channel status information (CSI2) indicates an occupancy of the ad hoc channel (ADCH) above a threshold value.

7. Method according to one of the preceding claims, wherein the payload data (N1, N2) are delivered to a PDCP layer for sending on the ad hoc channel (ADCH) when the size of the payload data (N1, N2) is below a threshold value.

8. Method according to one of the preceding claims, wherein a protocol stack (S-ITS-G5) according to ITS-G5 comprises no protocol layers above layer 2 that are exclusively associated with ITS-G5.

9. Roadside network unit (UE1) comprising:
- a processor for determining (302; 500; 512) payload data (N1, N2) for sending to at least one other roadside network unit (UE2; NE1), for delivering (304; 504; 514) the payload data (N1, N2) for sending on a sidelink channel (SC2) of a cell-based wireless communication network (CELL) in a licensed frequency band (LFB) and for delivering (304; 504; 514) the payload data (N1, N2) for sending on an ad hoc channel (ADCH) of an ad hoc wireless communication network (VANET) in an unlicensed frequency band (NLFB); and
- a transceiver (TC1) for the cell-based wireless communication network (CELL) for sending (304; 522) the payload data (N1, N2) on the sidelink channel (SC2) in the licensed frequency band (NLFB) and a transceiver (TA1) for the ad hoc wireless communication network (VANET) for sending (304; 508) the payload data (N1, N2) on the ad hoc channel (ADCH) in the unlicensed frequency band (NLFB).

10. Network unit (UE1) according to Claim 9, designed for carrying out the method according to one of Claims 2 to 8.

## Revendications

1. Procédé pour faire fonctionner une unité réseau côté route (UE1), l'unité réseau côté route (UE1) étant conçue pour envoyer des données utiles (N1, N2) sur un canal de liaison latérale (SC2) d'un réseau de communication sans fil à base de cellules (CELL) dans une gamme de fréquences sous licence (LFB) et sur un canal ad hoc (ADCH) d'un réseau de communication sans fil ad hoc (VANET) dans une gamme de fréquences sans licence (NLFB), le procédé comprenant les étapes suivantes :
- détermination (302 ; 500 ; 512) de données utiles (N1, N2) à envoyer à au moins une autre unité réseau côté route (UE2 ; NE1) ;
- préparation (304 ; 504 ; 514) des données utiles (N1, N2) pour l'envoi sur un canal de liaison latérale (SC2) d'un réseau de communication sans fil à base de cellules (CELL) dans une gamme de fréquences sous licence (LFB) et pour l'envoi sur un canal ad hoc (ADCH) d'un réseau de communication sans fil ad hoc (VANET) dans une gamme de fréquences sans licence (NLFB) ; et
- envoi (304 ; 508 ; 522) des données utiles (N1, N2) sur le canal de liaison latérale (SC2) dans la gamme de fréquences sous licence (NLFB) et sur le canal ad hoc (ADCH) dans la gamme de fréquences sans licence (NLFB).

2. Procédé selon la revendication 1, dans lequel les données utiles (N1, N2) sont associées à une exigence relative à la transmission, et dans lequel la préparation (504 ; 514) pour l'envoi sur le canal de liaison latérale (SC2) ou pour l'envoi sur le canal ad hoc (ADCH) s'effectue en fonction de l'exigence.

3. Procédé selon la revendication 2, dans lequel l'exigence comprend une classe de trafic des données utiles (N1, N2), en particulier une classe de trafic selon la norme ETSI TS 102 636-4-2 V1.1.1 (2013-10).

4. Procédé selon l'une quelconque des revendications 2 à 3, dans lequel l'exigence relative à la transmission comprend une taille des données utiles (N1, N2) et/ou une exigence de latence et/ou une fiabilité de la transmission des données utiles (N1, N2).

5. Procédé selon l'une quelconque des revendications précédentes, dans lequel une information d'état de canal locale (CSI2) du canal ad hoc (ADCH) est déterminée, et dans lequel la préparation (504 ; 514) s'effectue en fonction de l'information d'état de canal locale (CSI2).

6. Procédé selon la revendication précédente, dans lequel les données utiles (N1, N2) sont préparées pour l'envoi sur le canal de liaison latérale (SC2) lorsque l'information d'état de canal locale (CSI2) indique une occupation du canal ad hoc (ADCH) supérieure à une valeur de seuil.

7. Procédé selon l'une quelconque des revendications précédentes, dans lequel les données utiles (N1, N2) d'une couche PDCP sont préparées pour l'envoi sur le canal ad hoc (ADCH) lorsque la taille des données utiles (N1, N2) est inférieure à un seuil.

8. Procédé selon l'une quelconque des revendications précédentes, dans lequel une pile de protocoles (S-ITS-G5) selon ITS-G5 ne comprend pas de couches de protocole au-dessus de la couche 2, lesquelles sont exclusivement attribuées à ITS-G5.

9. Unité réseau côté route (UE1) comprenant :
- un processeur pour la détermination (302 ; 500 ; 512) de données utiles (N1, N2) à envoyer à au moins une autre unité réseau côté route (UE2 ; NE1), pour la préparation (304 ; 504 ; 514) des données utiles (N1, N2) pour l'envoi sur un canal de liaison latérale (SC2) d'un réseau de communication sans fil à base de cellules (CELL) dans une gamme de fréquences sous licence (LFB) et pour la préparation (304 ; 504 ; 514) des données utiles (N1, N2) pour l'envoi sur un canal ad hoc (ADCH) d'un réseau de communication sans fil ad hoc (VANET) dans une gamme de fréquences sans licence (NLFB) ; et
- un émetteur-récepteur (TC1) pour le réseau de communication sans fil à base de cellules (CELL) pour l'envoi (304 ; 522) des données utiles (N1, N2) sur le canal de liaison latérale (SC2) dans la gamme de fréquences sous licence (NLFB) et un émetteur-récepteur (TA1) pour le réseau de communication sans fil ad hoc (VANET) pour l'envoi (304 ; 508) des données utiles (N1, N2) sur le canal ad hoc (ADCH) dans la gamme de fréquences sans licence (NLFB).

10. Unité réseau (UE1) selon la revendication 9, qui est conçue pour mettre en œuvre le procédé selon l'une quelconque des revendications 2 à 8.
